# EUROPEAN PATENT APPLICATION

(11) **EP 4 797 530 A1**
(43) Date of publication of application: **26.08.2026**
(21) Application number: 26159328.9
(22) Date of filing: 18.02.2026
(51) Int. Cl.: H02S 20/10, H02S 20/23, H02S 20/24

(54) **SYSTEM AND METHOD FOR INSTALLING A PHOTOVOLTAIC SYSTEM**

(30) Priority: 20.02.2025 IT 202500003387
(71) Applicant: Gandellini Beniamino S.r.l., 25030 Brandico (BS) (IT)
(72) Inventor: Gandellini, Alberto, 25030 BRANDICO (IT)
(74) Representative: Tirloni, Bartolomeo

(57) **Abstract**

System (2), and related method, for installing a photovoltaic system (1) on a surface (100), wherein the system (2) comprises a plurality of ballast devices (4) distributed on the surface to form at least a first (5) and a second row (6) of ballast devices (4) parallel to each other, each ballast device (4) comprising one or more ballast elements (7) structurally identical to each other, each ballast element (7) comprising a through hole (8) vertically passing engaged by a fastening element (14) of the ballast device (4), wherein each of the first (5) and second row (6) comprises a respective support bar (24) for the photovoltaic panels fixed to the respective ballast devices (4) by means of a fixing bracket (22).

## Description

### Technical field of the invention

The present invention relates to a system and a method for installing a photovoltaic system on a surface.

### State of the art

In the context of installation of photovoltaic systems, fastening systems capable of securely fixing photovoltaic panels to a surface are known, ensuring stability and, if necessary, correct angulation of the panels, also in the presence of adverse environmental conditions. Ballasted installation systems are also known which anchor the photovoltaic panels on flat surfaces, such as roofs or flat grounds, by means of ballast elements (for example of cement, reinforced cement, concrete, etc.) to which the photovoltaic panels are fixed.

EP4407863A1 describes a modular ballasted system for photovoltaic panels for anchoring photovoltaic panels on flat surfaces.

### Summary of the invention

The term "parallel" and similar refers to a condition of pure parallelism or of a parallelism comprised in the interval 0°±15°, more preferably 0°±10°.

In the above context, the Applicant considers advantageous the use of ballasted installation systems since the ballasted installation systems are capable of providing sufficient force to stably anchor the panels to a flat surface, without necessarily resorting to perforations of the surface itself.

In addition to ensuring stability, the ballasted installation systems can be designed to offer a desired inclination of the photovoltaic panels with respect to the surface in order to maximize energy efficiency of the photovoltaic panels.

In the above context, the Applicant has addressed the problem of installing a photovoltaic system on a surface in a simple, rapid and/or economical manner.

According to the Applicant the above problem is solved by a system and a method for installing a photovoltaic system on a surface in accordance with the appended claims and/or having one or more of the following features.

According to an aspect the invention relates to a system for installing a photovoltaic system on a surface.

Said system comprises a plurality of ballast devices distributed on said surface along at least a first and a second row of ballast devices parallel to each other.

Preferably each ballast device comprises one or more ballast elements, wherein the ballast elements of said system are structurally identical to each other.

Preferably each ballast element comprises a vertically through hole.

Preferably each ballast device comprises a fastening element engaging said through hole of each respective ballast element, wherein said fastening element comprises an upper end protruding from said through hole of the respective uppermost ballast element of said ballast device.

Preferably each of said first and second row comprises a respective support bar mechanically connecting the respective ballast devices of each of said first and second row.

Preferably each ballast device comprises a fixing bracket mechanically fixed to the respective uppermost ballast element through said upper end of said fastening element, wherein said fixing bracket fixes said respective support bar to said ballast device.

According to an aspect the invention relates to a photovoltaic system comprising the system for installing the photovoltaic system according to the present invention, in one or more embodiments, and a plurality of photovoltaic panels mechanically fixed to said support bars.

According to an aspect the invention relates to a method for installing a photovoltaic system on a surface.

Preferably said method comprises distributing a plurality of fastening elements on said surface along at least a first and a second row of fastening elements parallel to each other.

Preferably said method comprises providing, for each fastening element, one or more ballast elements, wherein the ballast elements are structurally identical to each other, wherein each ballast element comprises a vertically through hole.

Preferably said method comprises, for each fastening element distributed on said surface, engaging said through hole of each respective ballast element with said fastening element, to form a first and second row of ballast devices.

Preferably said method comprises (preferably subsequently to said engaging) placing a respective support bar above each row of said first and second row of ballast devices.

Preferably said method comprises, for each ballast device, mechanically fixing a fixing bracket to an upper end of said respective fastening element protruding from said through hole of the respective top ballast element of said ballast device, to fix said respective support bar to said ballast device.

According to the Applicant, the fixing bracket mechanically fixed to an upper end of the fastening element protruding from the through hole of the respective top ballast element (coinciding with the only ballast element, in the case) simplifies the fixing of the support bar to the ballast devices, and consequently the installation of the photovoltaic system.

The present invention in the above aspect can have one or more of the following preferred features.

Preferably each ballast device of at least one of said first and second row of ballast devices, more preferably of both said first and second row of ballast devices, comprises two or more ballast elements vertically stacked on each other.

Preferably each fastening element engages said through hole of the respective ballast elements to mutually fix said respective ballast elements.

In this way the same fastening element used to fix the ballast elements to each other also fixes the fixing bracket, and consequently the support bar, to the ballast device. This allows to simplify the installation system, for example by reducing a global number of elements, and/or to simplify installation of the installation system, for example by reducing a number of required operations.

Preferably said method comprises providing, for each fastening element of at least one of, more preferably both, said first and second row of fastening elements, two or more ballast elements.

Preferably said method comprises, for each fastening element of at least one of, more preferably both, said first and second row of fastening elements, vertically stacking said at least two ballast elements by engaging said respective through holes of said at least two ballast elements with said fastening element, to form a first and second row of ballast devices.

Typically said surface is flat and horizontal.

Preferably the respective ballast devices of said first row are substantially aligned with the respective ballast devices of said second row to form a plurality of rows of ballast devices perpendicular to said first and second row. Preferably a distance between two adjacent rows of said plurality of rows is constant. In this way a grid (e.g. rectangular) of ballast devices uniformly distributed on the surface is created, facilitating management of the installation process.

Preferably each ballast element has a substantially parallelepiped shape, more preferably with a square base. In this way the ballast element is structurally simple and rational.

Preferably each ballast element comprises an upper surface, more preferably substantially flat (except for recesses and/or protrusions of negligible height).

Preferably said hole of each ballast element is centrally positioned in a top view. This facilitates fixing of the support bars and/or promotes overall balancing.

Preferably adjacent ballast elements of each ballast device are in mutual contact with each other (i.e. without interposition of other elements between the adjacent ballast elements). Preferably each ballast element comprises, superiorly and inferiorly, respective centering elements reciprocally counter-shaped. In this way the system is structurally simple and correct stacking of the ballast elements (and of the respective through holes) is facilitated.

Preferably each ballast device comprises one and only one fastening element (as described herein). In this way the system comprises a reduced number of elements, resulting structurally simple.

Preferably said fastening element comprises a base body (more preferably plate-shaped, for example having an inverted U-shaped profile) and a rod securely fixed to said base body and extending (vertically upwards) away from said base body. Preferably (at least) said upper end is threaded. Preferably said rod engages said through hole of each respective ballast element. In this way installation is facilitated.

Preferably each ballast element comprises, inferiorly, a recess that completely houses said base body of the respective fastening element. In this way the ballast element can rest stably on the surface.

In one embodiment, the ballast devices (considered in a totality of constituent elements of the complete installation system) of said first row and of said second row are structurally identical (in other words all ballast devices have the same number of ballast elements and are all without raising elements). In this way the panels can be installed parallel to the surface.

In one embodiment, each ballast device of said first row of ballast devices comprises a raising element resting on said uppermost ballast element of said ballast device. In said embodiment said method comprises, prior to placing said respective support bar above said first row of ballast devices, placing above said uppermost ballast element of each ballast device of said first row a raising element. In this way it is possible to exploit a difference in height between the ballast devices of the first row and the second row of ballast devices to impart to the photovoltaic panels a desired inclination with respect to the surface (by adjusting a distance between the first row and the second row as a function of a height of the raising element). This solution does not require an uppermost ballast element structurally different from underlying ballast elements or equal but provided with a predisposed hinged connection, as for example described in document EP4407863A1, with advantages in terms of simplicity and ease of installation. In other words the installation system of the present embodiment can be composed only of ballast elements all structurally identical to each other, with significant advantages in terms of simplification of production processes, logistic processes (warehouse, etc.) and installation processes.

Preferably said raising element comprises a vertically through hole aligned with said hole of each respective ballast element of said ballast device, wherein said fastening element, more preferably said rod of said fastening element, also engages said through hole of said raising element. In this way the raising element is fixed to the underlying ballast elements of the respective ballast device in a simple manner by means of the fastening element.

In one embodiment said raising element coincides with said uppermost ballast element of each ballast device of the first row of ballast devices, wherein each ballast device of the first row of ballast devices has a number of stacked ballast elements greater (e.g. by one unit) than a number of stacked ballast elements of each ballast device of the second row of ballast devices. In this way the system is simple to install and with a limited number of types of elements.

Preferably said raising element is plate-shaped and has an inverted U-shaped profile. Preferably said raising element comprises an upper surface, preferably flat, positioned at a distance from an upper surface of said uppermost ballast element and comprising said through hole of the raising element. In this way the raising element is simple and economical.

Preferably said installation system comprises a cable tray (e.g. with a lattice structure) fixed to said first row of ballast devices and extending along said first row to house one or more electric cables. Preferably each raising element is structured to anchor (e.g. by means of a tab embracing superiorly) said cable tray to said uppermost ballast element. In this way also the cable tray is installed rapidly and in a simple manner.

Preferably said fixing bracket comprises a respective through hole engaged by said fastening element, more preferably by (said upper portion of) said rod of said fastening element.

Preferably said fixing bracket comprises an upper portion shaped to surround said support bar on three sides of said support bar and a lower portion, more preferably flat, comprising said respective through hole. Preferably said fixing bracket is a flat plate bent at right angles.

Preferably said fixing bracket fixes said support bar directly (that is without interposition of other elements) to the uppermost ballast element of said ballast device or to said raising element.

Preferably each fastening element further comprises a nut screwed onto said rod of said fastening element, more preferably onto said upper end of said rod. In this way the entire ballast device (optionally including the raising element), as well as the fixing bracket, are clamped between the base body and the nut in a simple and rapid manner.

Preferably said respective support bar is hollow, more preferably has a (constant) C-shaped profile open at the top. In this way the production processes and installation processes of the support bars, as well as fixing of the panels, are facilitated.

Preferably said system further comprises a plurality of fixing clamps for mechanically anchoring said photovoltaic panels to said support bars.

Preferably said plurality of fixing clamps comprises, for each photovoltaic panel, two respective fixing clamps for each support bar. In this manner each photovoltaic panel is respectively fixed to the two support bars by means of (at least) four respective fixing clamps.

Preferably said system comprises, for each fixing clamp, a backing plate housed in said support bar and a screw that fixes said fixing clamp to said backing plate. In this way anchoring of the panels is simple, safe and rapid.

Preferably said method comprises fixing (more preferably directly) each photovoltaic panel to said respective support bar of each row of said first and second row of ballast devices, more preferably by means of respective fixing clamps.

### Brief description of the figures

Figure 1 shows a perspective view of an embodiment of a photovoltaic system according to the present invention;
Figures 2 and 3 show two respective perspective views of a ballast element;
Figure 4 shows a perspective view of a fastening element with some parts in transparency;
Figure 5 shows a perspective view of a raising element with some parts in transparency;
Figure 6 shows a perspective view of a fixing bracket with some parts in transparency;
Figures 7 and 8 show respectively a perspective view of two variants of fixing clamps;
Figures 9-12 schematically show some phases of the method for installing the photovoltaic system of Figure 1;
Figure 13 shows a perspective view of a further embodiment of a photovoltaic system according to the present invention.

### Detailed description of some embodiments of the invention

The features and the advantages of the present invention will be further clarified by the following detailed description of some embodiments, provided by way of example and not limiting the present invention, with reference to the attached figures.

In the figures, reference number 1 globally indicates a photovoltaic system according to the present invention.

The photovoltaic system 1 comprises the system 2 for installing the photovoltaic system on a surface 100 and a plurality of photovoltaic panels 3 mechanically fixed to the system 2.

Typically the surface 100 is flat and horizontal.

The system 2 comprises a plurality of ballast devices 4 distributed on the surface to form at least a first 5 and a second row 6 of ballast devices 4 parallel to each other.

Exemplarily the ballast devices 4 of the first row 5 are substantially aligned with the ballast devices 4 of the second row 6 to form a plurality of rows of ballast devices 4 perpendicular to the first 5 and second row 6. Exemplarily a distance between two adjacent rows is constant.

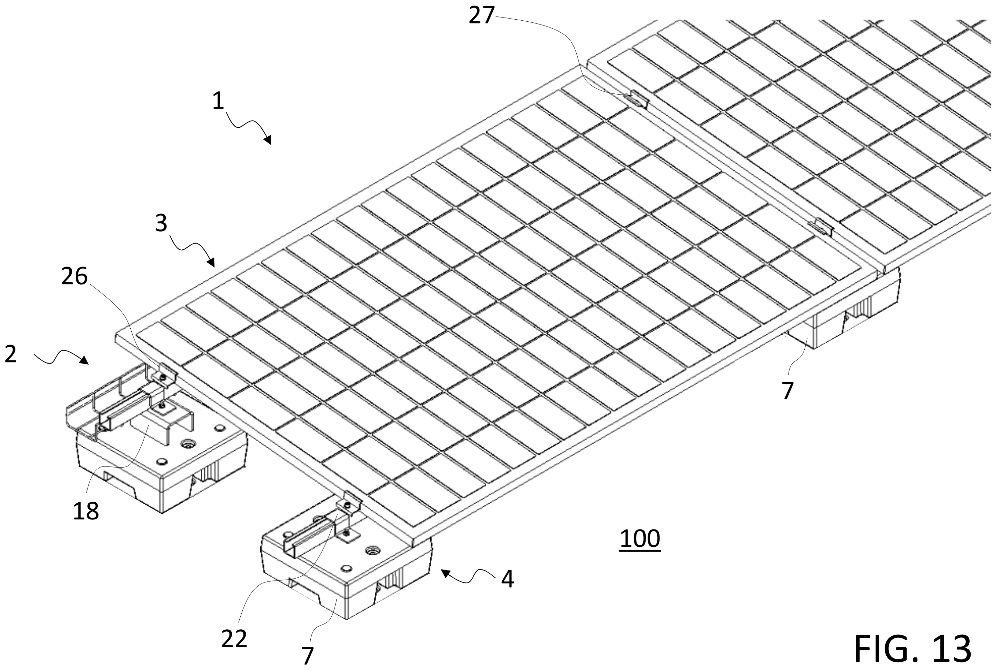

In a first embodiment, exemplarily shown in Figure 13, each ballast device 4 of the first 5 and second row 6 exemplarily comprises only one ballast element 7.

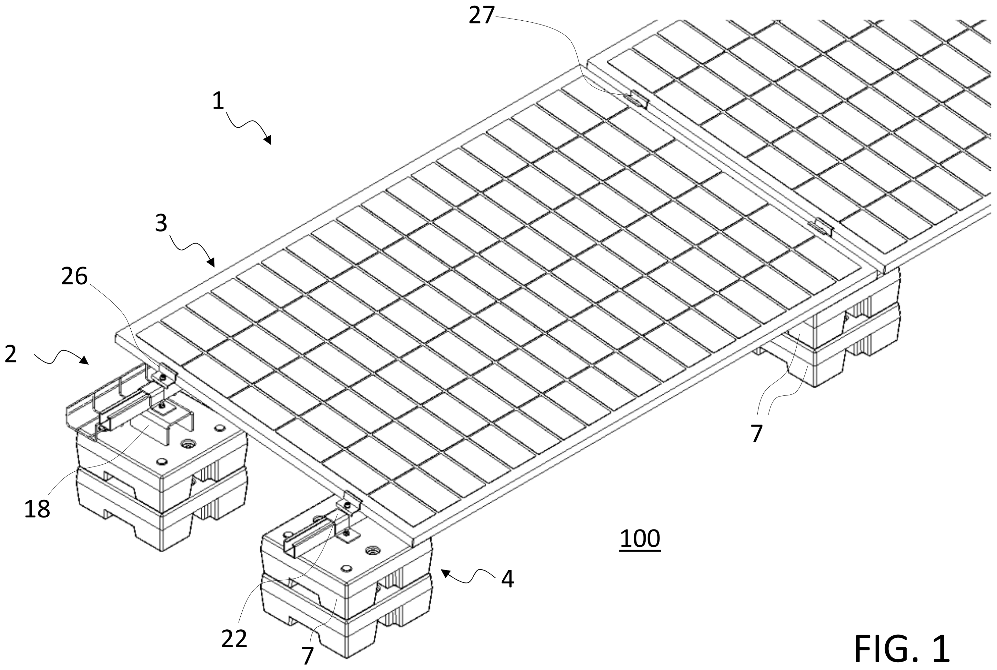

In a second embodiment, exemplarily shown in Figure 1, each ballast device 4 comprises two (or three, not shown) ballast elements 7 structurally identical to each other and vertically stacked in an aligned manner.

In a third embodiment, not shown, a number of stacked ballast elements in each ballast device of the first row of ballast devices is greater (e.g. by one unit) than a number of stacked ballast elements of each ballast device of the second row of ballast devices, for example two (or three) ballast elements in the first row and one (or, respectively, two) ballast elements in the second row.

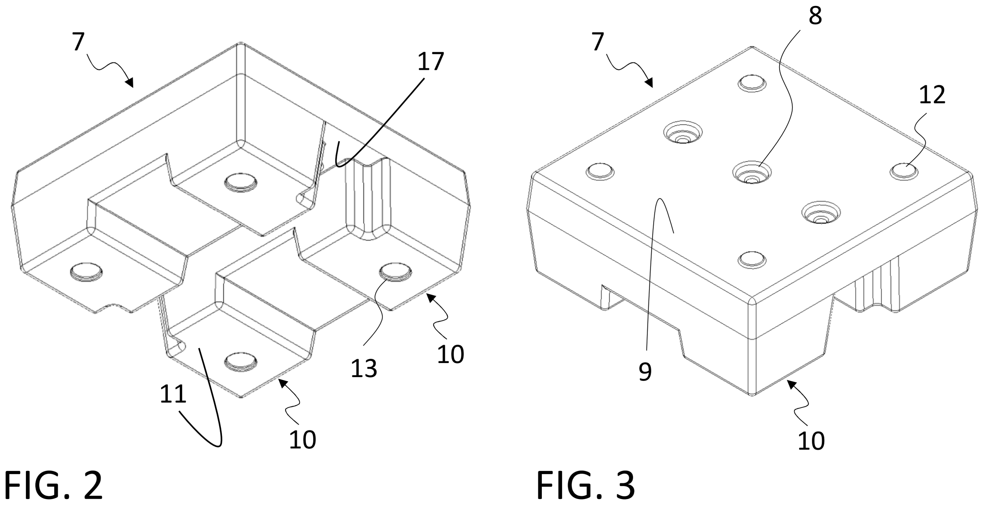

Exemplarily each ballast element 7 (Figures 2 and 3) has a substantially parallelepiped shape with a square base and comprises an upper surface 9 substantially flat (except for centering recesses and protrusions described below, having negligible height).

Exemplarily each ballast element 7 comprises a supporting foot 10 at each corner of the ballast element 7, each supporting foot 10 having a substantially flat lower surface.

Exemplarily adjacent ballast elements 7 of each ballast device 4 are in mutual contact with each other (i.e. without interposition of other elements). More in detail, each lower surface 11 of the respective supporting feet 10 of the upper ballast element contacts the upper surface 9 of the lower ballast element.

Exemplarily each ballast element comprises, superiorly and inferiorly, respective centering elements reciprocally counter-shaped. More in detail the upper surface 9 of each ballast element 7 comprises a respective raised centering element 12 at each vertex of the upper surface 9, and each lower surface 11 of the supporting feet 10 comprises a respective concave centering element 13 vertically aligned with the respective raised centering element 12. Exemplarily each raised centering element 12 of the underlying ballast element engages the respective concave centering element 13 of the overlying ballast element allowing correct alignment of the stacked ballast elements.

Exemplarily each ballast element 7 comprises a through hole 8 vertically passing and centrally positioned in a top view.

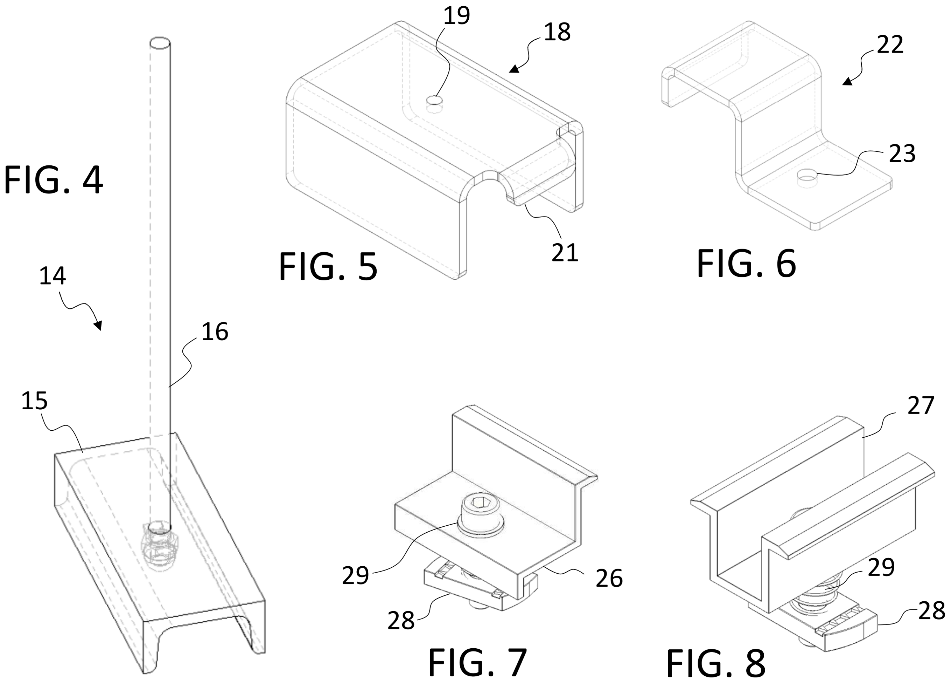

Exemplarily each ballast device 4 comprises only one fastening element 14 (Figure 4) comprising a base body 15 and a rod 16. Exemplarily the base body 15 has a plate-shaped configuration with a substantially inverted U-shaped profile and comprises a through hole in a central position of the base body 15.

Exemplarily each ballast element 7 comprises, inferiorly, a recess 17 counter-shaped to the base body 15 to completely house the base body 15 of the respective fastening element 14.

Exemplarily at least the two ends of the rod 16 are threaded. In one embodiment the rod 16 is entirely threaded.

Exemplarily the rod 16 is securely fixed to the base body 15, as shown in Figure 4, by means of a nut screwed onto the lower end of the threaded rod 16. Exemplarily the rod 16 extends vertically upwards away from the base body 15.

Exemplarily the rod 16 of the fastening element 14 engages the through hole 8 of each respective ballast element 7.

Exemplarily the rod 16 of the fastening element 14 comprises an upper end protruding from the through hole 8 of the uppermost ballast element 7 of the ballast device 4.

In one embodiment (not shown) suitable for installations with horizontal panels, the ballast devices 4 of the first 5 and of the second row 6 are structurally identical, for example the ballast devices 4 have the same number of ballast elements 7, the ballast devices 4 are without further elements (e.g. raising elements), and the respective rods 16 of the fastening elements 14 of the ballast device 4 have the same length.

In one embodiment (shown in Figures 1 and 11-13) each ballast device 4 of the first row 5 of ballast devices 4 comprises a raising element 18 resting on the uppermost ballast element 7 of the ballast device 4.

Exemplarily each ballast device 4 of the second row 6 of ballast devices 4 does not comprise any raising element or, alternatively (not shown), comprises a different raising element, for example lower than the raising element 18 of the ballast devices 4 of the first row 5.

In addition or alternatively to the raising element 18, the first row 5 can comprise (not shown), for each ballast device, a number of ballast elements 7 greater than the number of ballast elements 4 present in the second row (as described above with reference to the third embodiment).

Exemplarily the raising element 18, shown for example in Figure 5, comprises a through hole 19 vertically passing aligned with the hole of each respective ballast element 7 of the ballast device 4, wherein the rod of the fastening element 14 also engages the through hole 19 of the raising element 18.

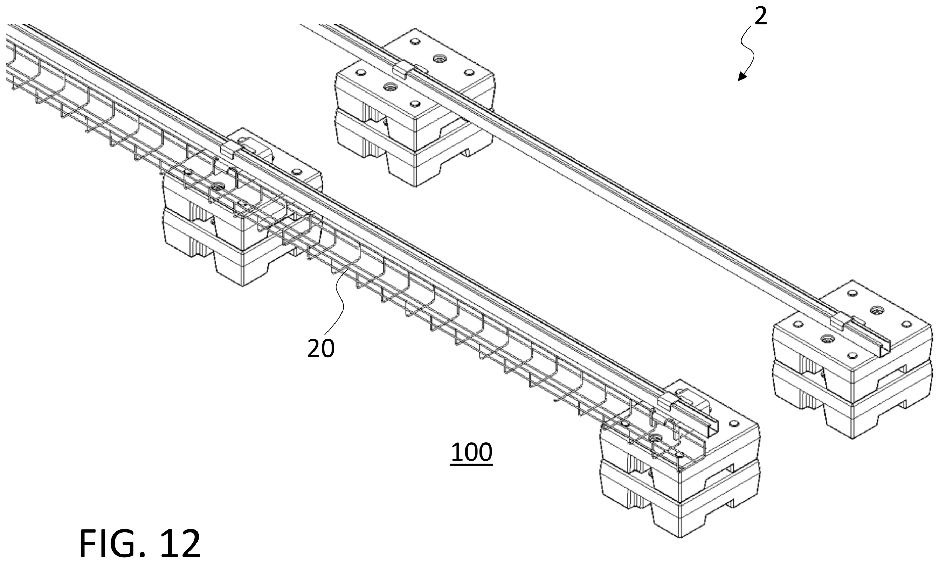

Exemplarily the raising element 18 is plate-shaped, has an inverted U-shaped profile and comprises an upper surface flat positioned at a distance from the upper surface 9 of the uppermost ballast element and comprising the through hole 19 of the raising element 18. Exemplarily the system 2 comprises a cable tray 20, better visible in Figure 12, fixed to the uppermost ballast elements of the first row 5 of ballast devices 4. Exemplarily the cable tray 20 has a lattice structure with a substantially U-shaped profile and extends along the first row 5 to house electric cables (not shown).

Exemplarily each raising element 18 comprises a tab 21 protruding from the upper surface of the raising element 18 and extending laterally and downwards to anchor the cable tray 20 to the uppermost ballast element by mechanical interposition.

Exemplarily each ballast device 4 comprises a fixing bracket 22 (Figure 6) mechanically fixed to the upper end of the rod 16 of the fastening element 14.

Exemplarily the fixing bracket 22 comprises a respective through hole 23 engaged by the upper portion of the rod 16 of the fastening element 14.

Exemplarily the fixing bracket 22 is a flat plate bent at right angles and having a substantially Z-shaped profile.

Exemplarily each of the first 5 and second row 6 comprises a respective support bar 24 of the photovoltaic panels 3, for example made of steel, which mechanically connects the respective ballast devices 4 of each of the first 5 and second row 6.

Exemplarily the respective support bar 24 is hollow and has a constant C-shaped profile open at the top. Exemplarily each support bar 24 can be made of a plurality of support bars arranged in series along a development direction of the support bars.

Exemplarily the fixing bracket 22 comprises an upper portion shaped to surround the support bar 24 on three sides of the support bar 24, and a lower portion, flat, comprising the respective through hole 23.

Exemplarily each fastening element 14 further comprises a threaded nut 25 (not shown in Figure 4) screwed onto the upper end of the rod 17 to clamp the ballast device (in particular the ballast elements, the raising element if present, and the fixing bracket) between the base body 15 and the nut 25. In this manner, as shown in Figure 1, the fixing bracket 22 fixes the support bar 24 directly (that is without interposition of other elements) to the uppermost ballast element 7 of the ballast device 5 (for the second row 6) or to the raising element 18, where present (as for the first row 5).

Exemplarily the photovoltaic panels 3 are mechanically fixed directly to the support bars 24 by means of a plurality of fixing clamps 26, 27. Exemplarily two types of fixing clamps are provided. An end fixing clamp 26, as for example shown in Figure 7, has a substantially Z-shaped profile and is structured to fix the respective free edge of the two photovoltaic panels 3 at an end of the row of photovoltaic panels. An intermediate fixing clamp 27, shown for example in Figure 8, has an inverted Ω-shaped profile and is structured to fix the respective edge of two adjacent panels.

Exemplarily, for each photovoltaic panel 3, two respective fixing clamps 26, 27 are provided for each support bar to fix each photovoltaic panel 3 to the two support bars 24 by means of four respective fixing clamps 26, 27.

Exemplarily, each fixing clamp 26, 27 is coupled (by means of a screw 29 and with interposition of a spring) to a backing plate 28 housed inside the support bar 24.

In the following a method according to the present invention for installing the photovoltaic system 1 shown in Figure 1 is described.

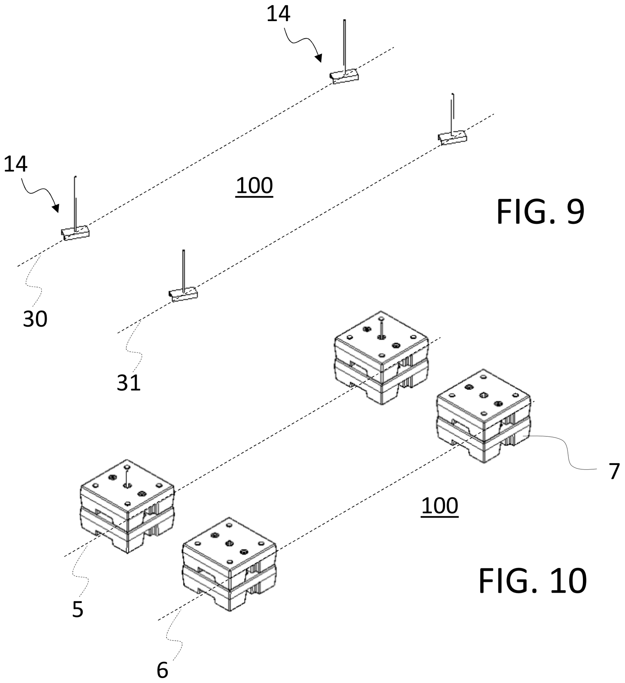

Firstly, the method comprises (Figure 9) distributing a plurality of fastening elements 14 (excluding the upper fixing nut 25) on the surface 100 along a first 30 and a second row 31 of fastening elements 14 parallel to each other (coinciding, once installation is completed, with the first and second row 5, 6 of ballast devices).

Subsequently (Figure 10), for each fastening element 14 two ballast elements 7 are vertically stacked by engaging the respective through holes 8 of the ballast elements 7 with the rod 16 of the fastening element 14, to form a first 5 and second row 6 of ballast devices 4 (still incomplete of the fixing brackets and of the raising elements).

Subsequently, where provided, a raising element 18 is placed above the uppermost ballast element of each ballast device 4 of the first row 5.

Exemplarily the respective support bar 24 is placed above each row of the first 5 and second row 6 of ballast devices 4. In particular, the respective support bar 24 of the first row 5 is placed above the raising element 18, and the respective support bar 24 of the second row 6 is placed above the uppermost ballast element of the ballast device.

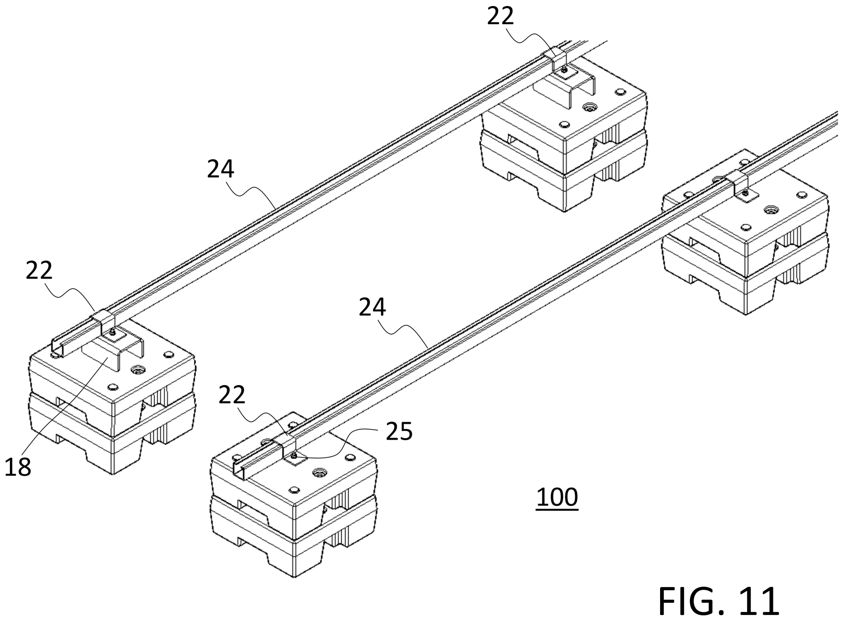

Subsequently (Figure 11), for each ballast device 4, a respective fixing bracket 22 is placed respectively above each uppermost ballast element 7 of the second row 6 and above each raising element 18 of the first row 5, inserting the upper end of the respective fastening element 14 into the through hole 23 of the fixing bracket. At this point the nut 25 is screwed onto the upper end of each fastening element 14 to mechanically clamp the entire stack comprised between the base body 15 and the nut 25, thus fixing the respective support bar 24 to the ballast device 4.

Optionally (Figure 12), the cable tray 20 is placed (before or after screwing the nut 25) on the respective ballast devices 4 of the first row 5 of ballast devices, inserting the cable tray 20 under the tab 21 of the raising element 18.

Exemplarily the method comprises placing directly each photovoltaic panel 3 on the respective support bar 24 of the first 5 and of the second row 6 of ballast devices 4.

In the embodiment shown in Figure 1, the photovoltaic panel 3, once placed on the support bars 24, is inclined with respect to the surface 100 by an inclination equal to a ratio between a height of the raising element 18 and a distance (adjustable) between the first 5 and the second row 6 of the ballast devices 4.

Exemplarily each photovoltaic panel 3 is fixed to each support bar 24 by means of the respective fixing clamps 26, 27. In particular, each backing plate 28 is inserted (optionally before fixing the fixing brackets 22) into the respective support bar 24 and, once the fixing clamp 26, 27 is positioned in the correct position, the screw 29 is tightened. Exemplarily, during such operation, the support bars 24 can undergo a local deformation at the fixing clamps 26, 27 to promote full contact between the support bars and the backing plates 28 and/or the fixing clamps.

The method for installing the photovoltaic system 1 shown in Figure 13 provides the same phases described above, except for stacking of the ballast elements.

## Claims

1. System (2) for installing a photovoltaic system (1) on a surface (100), said system (2) comprising a plurality of ballast devices (4) distributed on said surface along at least a first (5) and a second row (6) of ballast devices (4) parallel to each other,
wherein each ballast device (4) comprises one or more ballast elements (7), wherein the ballast elements of said system are structurally identical to each other, wherein each ballast element (7) comprises a vertically through hole (8),
wherein each ballast device (4) comprises a fastening element (14) engaging said through hole (8) of each respective ballast element (7), wherein said fastening element (14) comprises an upper end protruding from said through hole (8) of the respective uppermost ballast element (7) of said ballast device (4),
wherein each of said first (5) and second row (6) comprises a respective support bar (24) mechanically connecting the respective ballast devices (4) of each of said first (5) and second row (6),
wherein each ballast device (4) comprises a fixing bracket (22) mechanically fixed to the respective uppermost ballast element (7) through said upper end of said fastening element (14), and wherein said fixing bracket (22) fixes said respective support bar (24) to said ballast device (4).

2. System (2) according to claim 1, wherein each ballast device (4) of at least one of said first (5) and second row (6) of ballast devices (4) comprises two or more ballast elements (7) vertically stacked on each other, wherein each fastening element (14) engages said through hole (8) of the respective ballast elements (7) to mutually fix said respective ballast elements (7), wherein the respective ballast devices (4) of said first row (5) are substantially aligned with the respective ballast devices (4) of said second row (6) to form a plurality of rows of ballast devices (4) perpendicular to said first (5) and second row (6), wherein each ballast element (7) has a substantially parallelepiped shape and comprises a substantially flat upper surface, and wherein said hole (8) of each ballast element (7) is centrally positioned in a top view.

3. System (2) according to any one of the previous claims, wherein each ballast device (4) comprises one and only one fastening element (14),
wherein each fastening element (14) comprises:
- a base body (15),
- a rod (16) securely fixed to said base body (15) and extending away from said base body (15), said rod (16) engaging said through hole (8) of each respective ballast element (7), and
- a nut (25) screwed onto said upper end of said fastening element (14).

4. System (2) according to any one of the previous claims, wherein each ballast device (4) of said first row (5) of ballast devices (4) comprises a raising element (18) resting on top of said uppermost ballast element (7) of said ballast device (4), wherein said raising element (18) comprises a vertically through hole (19) aligned with said through hole (8) of each respective ballast element (7) of said ballast device (4), wherein said raising element (18) comprises a flat upper surface positioned at a distance from an upper surface of said uppermost ballast element (7) and comprising said through hole (19) of said raising element (18), and wherein said fastening element (14) also engages said through hole (19) of said raising element (18).

5. System (2) according to claim 4, wherein the system (2) comprises a cable tray (20) fixed to said first row (5) of ballast devices (4) and extending along said first row (5) to accommodate one or more electric cables, wherein each raising element (18) is structured to anchor said cable tray (20) to said uppermost ballast element (7).

6. System (2) according to claim 3 and any one of claims 4 or 5, wherein said raising element (18) and said base body (15) are plate-shaped and have an inverted U-shaped profile, and wherein said respective support bar (24) is hollow and has a C-shaped profile open at the top.

7. System (2) according to any one of the previous claims, wherein said fixing bracket (22) comprises a respective through hole (23) engaged by said fastening element (14), and wherein said fixing bracket (22) comprises an upper portion shaped to surround said support bar (24) on three sides of said support bar (24) and a lower portion comprising said respective through hole (23).

8. Photovoltaic system (1) comprising the system (2) for installing photovoltaic panels according to any one of the previous claims and a plurality of photovoltaic panels (3) mechanically fixed to said support bars (24) by means of a plurality of fixing clamps (26, 27), wherein said plurality of fixing clamps (26, 27) comprises, for each photovoltaic panel (3), two respective fixing clamps (26, 27) for each support bar (24), each fixing clamp (26, 27) being mechanically fixed to a backing plate (28) housed in said support bar (24) by means of a screw (29).

9. Method for installing a photovoltaic system (1) on a surface (100), wherein said method comprises:
- distributing a plurality of fastening elements (14) on said surface (100) along at least a first (30) and a second row (31) of fastening elements (14) parallel to each other;
- providing, for each fastening element (14), one or more ballast elements (7), wherein the ballast elements (7) are structurally identical to each other, wherein each ballast element (7) comprises a vertically through hole (8);
- for each fastening element (14) distributed on said surface (100), engaging said respective through hole (8) of each respective ballast element (7) with said fastening element (14), to form a first (5) and a second row (6) of ballast devices (4);
- placing a respective support bar (24) above each row of said first (5) and second row (6) of ballast devices (4); and
- for each ballast device (4), mechanically fixing a fixing bracket (22) to an upper end of said respective fastening element (14) protruding from said through hole (8) of the respective top ballast element (7) of said ballast device (4), to fix said respective support bar (24) to said ballast device (4).

10. Method according to claim 9, comprising providing, for each fastening element (14) of at least one of said first (30) and second (31) rows of fastening elements (14), two or more ballast elements (7), wherein said method comprises, for each fastening element (14) of at least one of said first (30) and second (31) rows of fastening elements (14), vertically stacking said at least two ballast elements (7) by engaging said respective through holes of said at least two ballast elements with said fastening element to form a first (5) and second (6) row of ballast devices (4), wherein said method comprises, prior to placing said respective support bar (24) above said first row (5) of ballast devices (4), placing a raising element (18) above said uppermost ballast element (7) of each ballast device (4) of said first row (5), and wherein said method comprises fixing each photovoltaic panel (3) to said respective support bar (24) of each row of said first (5) and second (6) rows of ballast devices (4) by means of respective fixing clamps (27).
